# EUROPÄISCHE PATENTSCHRIFT

(11) **EP 2 906 409 B1**
(45) Veröffentlichungstag und Bekanntmachung des Hinweises auf die Patenterteilung: **29.04.2020**
(21) Anmeldenummer: 13785344.6
(22) Anmeldetag: 10.10.2013
(51) Int. Cl.: B29C 67/00

(54) **3D-MEHRSTUFENVERFAHREN**
3D MULTI-STAGE METHOD
PROCÉDÉ 3D EN PLUSIEURS ÉTAPES

(30) Priorität: 12.10.2012 DE 102012020000
(43) Veröffentlichungstag der Anmeldung: 19.08.2015
(73) Patentinhaber: Voxeljet AG, 86316 Friedberg (DE)
(72) Erfinder: EDERER, Ingo, 82269 Geltendorf (DE); GÜNTHER, Daniel, 80637 München (DE)
(74) Vertreter: Helbig, Christian
(86) Internationale Anmeldenummer: PCT/DE2013/000589
(87) Internationale Veröffentlichungsnummer: WO 2014/056482

(56) Entgegenhaltungen:
- EP-A2- 1 524 049
- WO-A2-01/34371
- WO-A2-2005/097476
- DE-C1- 4 440 397

## Beschreibung

Die vorliegende Erfindung betrifft ein mehrstufiges 3D Druckverfahren.

### Hintergrund der Erfindung

Verfahren zum Erzeugen von Formen und Giessereikernen sind in vielfältiger Weise bekannt. Automatisierte Maschinenformverfahren sind eine wirtschaftliche Lösung im Bereich von großen Stückzahlen. Die werkzeuglose Formerstellung mit sog. Rapid-Prototypingverfahren oder 3D Druckverfahren sind für kleine bis mittlere Serien eine Alternative zu Maschinenformverfahren.

Basierend auf dem unter dem Namen des Erfinders Johannes Croning bekannten Croning-Verfahren (DE832937) wurden Lasersinterverfahren entwickelt, die eine werkzeuglose Fertigung ermöglichen. Dabei wird ein Formteil schichtweise aus mit einem Binder beschichteten Partikelmaterial aufgebaut. Die Verbindung der einzelnen losen Partikel wird beispielsweise über einen Energieeintrag mittels Laserstrahl erreicht (EP 0 711 213).

In der Praxis wird die im Stand der Technik beschriebene Verfestigung über die Polykondensationsreaktion kaum erreicht, da prozesstechnische Schwierigkeiten auftreten. So würde eine für die Entwicklung der Endfestigkeit ausreichende Belichtung zu einem starken Schwinden der Binderhülle führen und dieses wiederum zu einem nicht mehr prozessfähigen Verzug der aktuellen Schicht. Die Festigkeiten (Grünfestigkeit) der so erzeugten Formteile beim Auspacken der Formteile - auch als Entpacken bezeichnet - aus dem losen Sand sind deshalb äußerst gering. Dies führt zu Problemen beim Entpacken und führt nicht selten zu einer Beschädigung der Formteile, die dadurch unbrauchbar werden. Es wurde beschrieben dieses Problem beim Entpacken durch die Verwendung einer Lötlampe zu beheben und so zusätzlich die Oberfläche mittels einer Lötlampe zu verfestigen. Diese Vorgehensweise erfordert allerdings nicht nur sehr viel Erfahrung, sondern sie stellt außerdem einen erheblichen Arbeits- und Zeitaufwand dar.

Die mangelnden Grünfestigkeiten werden auf zu kleine oder zu schwache Binderbrücken zurückgeführt. Solange man verzugsfrei produzieren will, bleibt der Binder zu hochviskos und bildet keine ausreichende Brücke.

In der DE 197 23 892 C1 wird hingegen ein Schichtbauverfahren beschrieben, bei dem ein Croningsand mit einem Moderator bedruckt wird, der dazu führt, die Aktivierungsenergie des bedruckten Binder-umhüllten Croningsandes gegenüber dem unbedruckten Material herab oder herauf zu setzen und dann den Sand mittels einer Wärmestrahlungsquelle zu belichten. Dies soll dann dazu führen, dass ausschließlich die bedruckten bzw. die unbedruckten Bereiche aushärten bzw. binden. Anschließend würden die fertigen Formteile vom ungebundenen Sand befreit. Es hat sich jedoch herausgestellt, dass sich geeignete Moderatoren wie z.B. schwefelige Säuren nicht oder nur sehr schlecht mit marktüblichen Einzeltropfenerzeugern verdrucken lassen. Zudem hat sich als nachteilig herausgestellt, dass der nichtverfestigte Sand durch die Belichtung so vorgeschädigt, dass er nicht mehr in vollem Umfang in dem Verfahren wiederverwendet werden kann. Dies erhöht somit nicht nur den Materialaufwand sondern auch die Kosten und ist auch deshalb nachteilig.

In der US 2005/0003189A1 wird ein Schichtbauverfahren für die Herstellung von Modellen beschrieben, bei dem ein thermoplastisches Partikelmaterial mit einem pulverförmigen Binder gemischt ist und schichtweise mit einem wässrigen Lösungsmittel bedruckt wird. Der Binder soll dabei in dem wässrigen Druckmedium leicht löslich sein. Anschließend werden die Modelle vom umliegenden Pulver befreit und evtl. in einem Postprozess in einem Ofen getrocknet, um die Festigkeit zu steigern.

In der DE 102 27 224 B4 wird ein Schichtbauverfahren für die Herstellung von Feingussurmodellen beschrieben, bei dem ein PMMA-Partikelmaterial, das mit einem PVP-Binder beschichtet ist, schichtweise mit einem Gemisch aus einem Lösungsmittel und einem Aktivator bedruckt wird, um den Binder zu lösen und die Binderaktion zu aktvieren. In der WO 01/34371 A2, wird ein Schichtbauverfahren beschrieben wobei das Partikelmaterial eine einphasige Beschichtung oder Umhüllung mit einem oder mehreren Materialien umfasst.

Die bekannten Verfahren sind entweder werkzeugabhängige Prozesse oder die bekannten 3D Druckprozesse erreichen zu geringe Grünfestigkeiten für eine effiziente und wirtschaftlich vorteilhafte Herstellung von Formteilen.

### Beschreibung der Erfindung

Es bestand also das Bedürfnis ein Verfahren zum schichtweisen, werkzeuglosen Aufbauen von Formteilen vorzugsweise für Gießereianwendungen mittels Binder-umhüllten Partikelmaterial bereitzustellen, bei dem Auspackfestigkeiten oder Entpackfestigkeiten erreicht werden, die es erlauben, zeit- und kostenintensive Handarbeit zu reduzieren oder ganz zu vermeiden und vorzugsweise maschinell- oder robotergestütztes Entpacken zu ermöglichen, oder jedenfalls die Nachteile des Standes der Technik zu verringern oder ganz zu vermeiden.

Die der Anmeldung zugrunde liegende Aufgabe wird durch ein Verfahren gemäß Anspruch 1 gelöst.

Bevorzugte Ausführungsformen sind in den Unteransprüchen verwirklicht.

Die Aufgabe wird gelöst durch ein Verfahren zum Herstellen eines oder mehrerer Formkörper, wobei das Verfahren die Schritte umfasst:
a. schichtweisen Aufbau eines oder mehrerer Formkörper mittels wiederholtem Aufbringen von Partikelmaterial im 3D Druckverfahren, wobei das Partikelmaterial gekennzeichnet ist durch eine einphasige Beschichtung oder Umhüllung mit einem oder mehreren Materialien, wobei die Beschichtung oder die Umhüllung ein Binder ist,
b. einen Vorverfestigungsschritt zum Erzielen einer Vorverfestigung des Formkörpers, wobei der Vorverfestigungsschritt mittels Verwendung eines Lösemittels und einer Polymerisationsreaktion erfolgt durch selektives Aufdrucken eines Lösungsmittels auf das Binder-umhüllte Partikelmaterial,
c. einen Entpackschritt, wobei das nicht verfestigte Partikelmaterial von dem vorverfestigten Formkörper getrennt wird,
d. einen Endverfestigungsschritt, bei dem der Formkörper seine Endfestigkeit erhält, durch Einwirkung von Wärmeenergie, wobei der Binder polymerisierbare Monomere enthält und wobei die Beschichtung oder Umhüllung Stoffe zum Start einer Polymerisation mit dem Binder enthält.

Bevorzugt ist, dass der Formkörper einem oder mehreren weiteren Bearbeitungsschritten unterzogen wird. Hierbei können alle dem Fachmann bekannten weiteren Verfahren oder Arbeitsschritte Anwendung finden. Der eine oder die mehreren weiteren Bearbeitungsschritte sind beispielsweise ausgewählt aus der Gruppe bestehend aus Polieren oder Färben.

In dem erfindungsgemäßen Verfahren wird der Formkörper (auch als Bauteil bezeichnet) im Vorverfestigungsschritt soweit verfestigt, dass ein Entpacken aus dem nicht verfestigten Partikelmaterial möglich ist und der Formkörper dabei seine im 3D Druckverfahren definierte Form im wesentlichen beibehält. Insbesondere Schrumpfungen oder dergleichen werden im Wesentlichen vermieden. Das Entpacken kann hierbei manuell oder maschinell oder Roboter-gestützt erfolgen.

Es können in dem vorverfestigten Formkörper (Grünkörper) nach dem Vorverfestigungsschritt Biegefestigkeiten von mehr als 120 N/cm², vorzugsweise von mehr als 200 N/cm², besonders bevorzugt von 120 bis 400 N/cm² erreicht werden.

Nach dem Entpacken kann der Formkörper wieder mit Partikelmaterial, das vorzugsweise inert ist, umgeben werden, um so im folgenden Wärmebehandlungsschritt die Formkörper zu stützen und die Wärme besser leiten zu können sowie eine gleichmäßige Wärmeleitung zu erzielen. Zur gleichmäßigen Verteilung des Partikelmaterials können Rüttler eingesetzt werden.

Es können in dem Formkörper nach dem Endverfestigungsschritt Biegefestigkeiten von mehr als 250 N/cm², vorzugsweise von 250 bis 750 N/cm², vorzugsweise von mehr als 750 N/cm², besonders bevorzugt von mehr als 1000 N/cm², noch mehr bevorzugt von mehr als 1200 N/cm², erzielt werden.

In einer bevorzugten Ausführungsform wird das Verfahren so ausgeführt, dass der Vorverfestigungsschritt ohne Einbringen zusätzlicher Wärmeenergie erfolgt.

Der Endverfestigungsschritt kann vorzugsweise mittels Wärmebehandlung erfolgen. Allerdings sind auch andere Endverfestigungsverfahren und Behandlungen möglich, die dem Fachmann bekannt sind.

Das Bauteil kann durch inertes Material während der Wärmebehandlung gestützt werden.

Im Endverfestigungsschritt werden Temperaturen von vorzugsweise 110 °C - 130 °C, vorzugsweise bei 130 °C - 150 °C, besonders bevorzugt bei 150 °C - 200 °C verwendet.

Die Temperatur am Bauteil liegt vorzugsweise im Zeitbereich von 2-24 Std., besonders bevorzugt wird die Temperatur über 2-5 Std. gehalten.

Als Partikelmaterial wird natürlicher Quarzsand, Kerphalite, Cerasbeads, Zirkonsand, Chromitsand, Olivinsand, Schamotte, Korund oder Glaskugeln verwendet.

Das Partikelmaterial ist gekennzeichnet durch eine einphasige Beschichtung oder Umhüllung mit einem oder mehreren Materialien. Die Beschichtung oder die Umhüllung ist ein Binder.

In dem erfindungsgemäßen Verfahren umfasst vorzugsweise die Umhüllung oder Beschichtung thermoplastische Polymere, lösliche Polymere, Wachse, Kunst- und Naturharze, Zuckern, Salze, anorganische Netzwerkbildner oder Wassergläser. Vorzugsweise besteht das Lösungsmittel aus Wasser, Kohlenwasserstoffen, Alkoholen, Estern, Ethern, Ketonen, Aldehyden, Acetaten, Succinaten, Monomeren, Formaldehyd, Phenol und Gemische davon oder diese umfasst.

Vorzugsweise trägt das in der Umhüllung oder Beschichtung enthaltene Material zu der Endfestigkeit oder zu der Vorfestigkeit im Vorverfestigungsschritt und zu der Endfestigkeit im Endverfestigungsschritt bei.

In dem erfindungsgemäßen Verfahren nach einer bevorzugten Ausführungsform, sind in der Umhüllung oder Beschichtung zwei unterschiedliche Materialien enthalten, wobei das eine Material im wesentlichen für den Vorverfestigungsschritt bestimmt ist und das andere Material im wesentlichen für den Endverfestigungsschritt bestimmt ist.

Somit wird das Verfahren vereinfacht, kann schneller durchgeführt werden und wird somit wirtschaftlicher.

Vorzugsweise kann die Beschichtung oder Umhüllung ein Farbindikator enthalten, der durch den Binder aktiviert wird.

Der erste Schritt des erfindungsgemäßen Verfahrens kann grundsätzlich wie im Stand der Technik für 3D Druckverfahren beschrieben durchgeführt werden. Beispielhaft seien hier EP 0 431 924 B1 und DE102006038858A1 genannt. Der anschließende Entpackschritt kann manuell, jedoch bevorzugt maschinell unterstützt durchgeführt werden. Roboter unterstütztes entpacken stellt eine weitere bevorzugte Variante eines erfindungsgemäßen maschinellen Verfahrensschrittes dar. Hierbei kann sowohl das Entpacken, d.h. das Entfernen des nicht verfestigten Partikelmaterials, als auch das Transferieren des Formteiles mittels computergesteuerten Greifarmen und Absaugeinheiten erfolgen.

Die Erfindung wird mittels eines Partikelmaterialbettbasierten 3D Druckverfahren durchgeführt. Der gewünschte Formkörper wird beim 3D Druck durch wiederholtes schichtweises Aufbauen erreicht. Dazu wird Partikelmaterial in dünner Schicht auf eine Ebene gestrichen (nivelliert). Im Anschluss wird ein Bild gemäß des Schnittes durch das gewünschte 3D-Objekt durch einen Tintenstrahldruckkopf aufgedruckt. Die bedruckten Stellen verfestigen und verbinden sich mit darunter liegenden bereits bedruckten Flächen. Die entstandene Schicht wird entsprechend der Bauform der Anlage um die Stärke einer Schicht verschoben.

Es können 3D-Drucker verwendet werden, die die Schicht in Richtung der Gravitation absenken. Vorzugsweise werden Anlagen eingesetzt, die nach dem Durchlaufprinzip gestaltet sind, und hierbei werden die Schichten in Förderrichtung verfahren. Auf die Baufläche wird nun wieder Partikelmaterial aufgebracht. Der Bauprozess aus den Schritten Beschichten, Bedrucken und Absenken wird solange wiederholt, bis der oder die Formkörper fertig sind.

Der Verfahrensschritt des 3D Druckens und das Vorverfestigen wird über selektives Aufdrucken eines Lösemittels auf das Binder-umhüllte Partikelmaterial realisiert. Das Lösemittel verflüssigt die Umhüllung. Die Viskosität liegt dabei deutlich niedriger als bei thermischem Schmelzen. Während die Viskositäten von Polymerschmelzen im Bereich von ca. 10-1000 Pas liegen, kann eine Polymerlösung, je nach Zugabemenge und Lösungsmittel eine Viskosität von wenigen mPas erreichen. Vorzugsweise wird eine Viskosität von 2 - 100 mPa·s mehr bevorzugt von 2 - 10 mPa·s, noch mehr bevorzugt von 2 -5 mPa·s.

Bei Abtrocknung des Lösemittels zieht sich das Flüssigkeitsgemisch in die Kontaktstelle zwischen zwei Partikel zurück und hinterlässt dann eine kräftige Brücke. Der Effekt kann durch Zugaben von Polymeren in die Druckflüssigkeit verstärkt werden. Erfindungsgemäss werden geeignete Verfahrensbedingungen gewählt bzw. entsprechende Komponenten, die für eine Polymerisationsreaktion erforderlich sind in die Beschichtung des Partikelmaterials eingearbeitet. Alle dem Fachmann bekannten Harze oder Kunstharze, die für Polymerisations-, Polyadditions- oder Polykondensationsreaktionen geeignet sind, können hier zur Anwendung kommen. Derartige Materialien sind vorzugsweise definiert durch DIN 55958 und werden durch Bezugnahme hiermit in die Offenbarung dieser Beschreibung aufgenommen.

Erfindungsgemäß wird als Partikelmaterial ein mit einem Binder umhüllter Giessereiformstoff benutzt. Die Umhüllung ist bei Raumtemperatur fest. Das Partikelmaterial ist somit riesel- und fließfähig. Der Stoff, der die Partikel umhüllt, ist vorzugsweise in der Druckflüssigkeit, die durch den Tintenstrahldruckkopf aufgebracht wird, löslich. In ebenso bevorzugter Ausführung enthält die Druckflüssigkeit den Umhüllungsstoff oder dessen Vorformen als Dispersion oder Lösung.

Ebenso bevorzugt kann der in der Druckflüssigkeit vorhandene Stoff einer anderen Stoffgruppe angehören. In einer Ausgestaltung der Erfindung verflüchtigt sich das Lösemittel durch Abdampfen in umgebendes Partikelmaterial oder die Atmosphäre. Ebenso kann aber auch das Lösemittel mit dem Umhüllungsstoff reagieren und verfestigen.

Die Stoffgruppen für das Partikelmaterial und die Umhüllung sind vielfältig. Die Grundmaterialien können beispielsweise natürlicher Quarzsand, Kerphalite, Cerabeads, Zirkonsand, Chromitsand, Olivinsand, Schamotte oder Korund sein. Generell eigenen sich aber auch andere partikelförmige Grundstoffe. Die Umhüllung kann organisch oder anorganisch sein. Sie wird entweder thermisch, in Lösung oder durch mechanisches Aufschlagen oder Walzen aufgebracht.

Beispiele für geeignete Binder sind neben dem Phenolharz,
Furan-, Harnstoff- oder Aminoharze, Novolake oder Resole, Harnstoff-Formaldehydharze, Furfurylalkohol-Harnstoff-Formaldehydharze, Phenolmodifizierte Furanharze, Phenol- Formaldehydharze oder Furfurylalkohol-Phenol-Formaldehydharz, die jeweils flüssig, fest, granuliert oder pulverförmig vorliegen können. Auch die Verwendung von Epoxidharzen ist möglich.

Besonders bevorzugt ist z.B. umhüllter Quarzsand mit einer mittleren Korngröße von ca. 140 µm wie etwa das Produkt RFS-5000 von Hüttenes - Albertus Chemische Werke. Dieser wird mit einer Resolharzumhüllung geliefert. Als Druckfluid kann in einer einfachen Ausführung ein Ethanol / Isopropanolgemisch verwendet werden. Zusätzlich kann dem Druckfluid vorgelöstes Harz beigegeben werden. Ein Beispiel hierfür ist das Produkt Corrodur von Hüttenes-Albertus. Bei einer Zeitdauer von 24 Stunden nach dem Druckvorgang und 10 Gew.-% Flüssigbinderzugabe ergibt sich erfindungsgemäß eine Festigkeit von über 120 N/cm². Damit können selbst filigrane Strukturen rasch entpackt werden.

Weiterhin bevorzugt kann als flüssiger Binder für das System ein hochkonzentriertes Material in Form von vorgelöstem Harz des Typs Corrodur verwendet werden. Als Lösemittelzusatz kann Dioxolan zum Einsatz kommen. Bedingt durch den hohen Harzanteil können Formgrundstoffe mit niedrigem Umhüllungsgehalt gewählt werden. Ebenso kann- mit Festigkeitseinbußen- unbehandelter Sand verwendet werden. Die erfindungsgemäße Ausführung ist hier in der kompletten Lösung des Umhüllungswerkstoffes zu sehen.

In einer Ausführungsform umfassen die im ersten Verfahrensschritt des 3D Druckens verwendeten Materialien bereits alle auch für den Endverfestigungsschritt erforderlichen Komponenten, vorzugsweise Binder im Partikelmaterial, die zunächst im Vorverfestigungsschritt über einen anderen Bindemechanismus (physikalisch statt chemisch oder umgekehrt) oder andere Materialien (Binder in der Drucklösung) gebunden werden und im abschließenden Endverfestigungsschritt so reagieren/verfestigen, dass die vorteilhafte Endfestigkeit erzielt wird. Es wird so vorteilhaft möglich, die verschiedenen Verfestigungsschritte zu vereinfachen, indem das Partikelmaterial im ersten Verfahrensschritt bereits alle für die Endverfestigung erforderlichen Materialien enthält und es möglich wird, ohne weiteren Materialeintrag im Wärmebehandlungsschritt die vorteilhafte Endfestigkeit zu erzielen.

Die Erfinder konnten mit dem erfindungsgemäßen Verfahren und der erfindungsgemäßen Vorrichtung durch Kombination von Materialien und Verfahrensbedingungen vorteilhafter Weise erreichen, dass ein effizientes Verfahren bereitgestellt wurde, das es ermöglicht, Arbeitsschritte zu verbinden, den Einsatz von manuellen Schritten zu vermindern und so die Prozessgeschwindigkeit positiv zu verbessern. Außerdem wird es mit dem erfindungsgemäßen Verfahren möglich, Biegefestigkeiten in Grünlingen zu erreichen, die ausreichen, um diese ohne Beschädigungen oder sonstige Beeinträchtigungen einem thermischen Verfestigungsschritt ohne Werkzeugeinsatz in 3D Druckverfahren zuführen zu können.

Mit dem erfindungsgemäßen Verfahren und der hierfür geeigneten Vorrichtungen ist es überraschender Weise möglich, in dem Partikelmaterial alle für den Vorverfestigungsschritt sowie den Wärmeendverfestigungsschritt nötigen Materialien zu umfassen. Erstaunlich war, dass die kombinierten Materialien, d.h. die für den Vorverfestigungsschritt sowie den Endverfestigungsschritt wirksamen Materialien, nicht in einer Weise wechselwirken, dass es zu für das Verfahren abträglichen Wechselwirkungen dieser Materialien kommt.

Die besonders bevorzugten Materialkombinationen gemäß bevorzugter Ausführungsformen sind in den Beispielen wiedergegeben. Hierbei können auch Unterkombinationen von Materialien aus verschiedenen Beispielen zusammen verwendet werden.

### Beschreibung der Figuren

Fig. 1 stellt Partikelmaterial (100) dar, wobei ein Sandkorn (101) mit Binder (102) umhüllt ist.
Fig. 2 zeigt den Prozess des Abdampfens von Partikelmaterial (200) zu dem Lösungsmittel zugefügt wurde, wodurch sich die Partikel (200 bestehend aus 201 und 202) verbinden und das Material vorverfestigt.
Das Abdampfen des Lösungsmittels kann auch über Wärmezufuhr (203) beschleunigt werden.
Fig. 3 zeigt die Struktur eines vorverfestigten Formkörpers (300).
Fig. 4 zeigt den Vorgang nach dem Eindrucken; hierbei beginnt das Lösemittel in die Binderhülle (402) des Partikelkerns (401) einzudringen.
Fig. 5a - d veranschaulichen den Abdampfprozess des Lösemittels, wobei sich das Gemisch in der Kontaktstelle (503) zwischen den Partikeln (500) konzentriert (Fig. 5d).

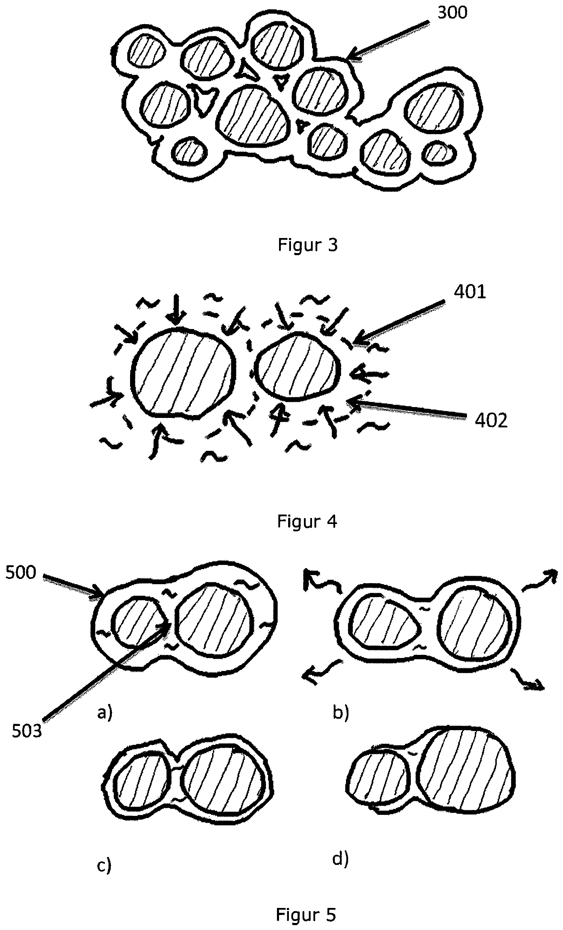

Wie oben beschrieben, wird der Formkörper durch das Verbinden einzelner Partikel gebildet (Fig. 3).

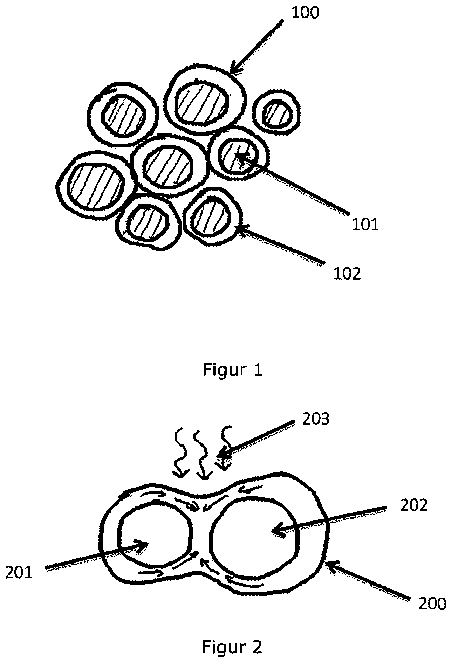

Basis des partikelmaterialbasierten Prozesses ist ein Partikelmaterial (100), das mit einem Binder (102) umhüllt ist (Fig. 1). Die Hülle (102) weist charakteristisch andere Eigenschaften als das Grundmaterial (101) auf. Als Beispiel kann der vom Croning-Prozess bekannte Sand genannt werden. Hier ist ein Sandkorn (101) mit einem Novolakharz (102) umhüllt. Dieses Harz wird beim Herstellungsprozess aufgeschmolzen und mit dem Sand vermischt. Der Sand wird solange gemischt, bis das Harz erkaltet ist. Dadurch trennen sich die einzelnen Körner und ein rieselfähiges Material (100) entsteht.

Als geeignete Sande für die Verarbeitung im erfindungsgemäßen Verfahren kommen Grundmaterialien mit 10 - 2000 µm mittlerem Korndurchmesser in Frage. Für die anschließende Verwendung in Gussprozessen eignen sich verschiedene Grundmaterialien wie natürlicher Quarzsand, Kerphalit, Cerabeads, Zirkonsand, Chromitsand, Olivinsand, Schamotte, Korund und Glaskugeln.

Binder können in verschiedensten Werkstoffen aufgebracht werden. Wichtige Vertreter sind Phenolharze (Resolharze und Novolake), Acrylharze und Polyurethane. Desweiteren können alle Thermoplaste thermisch auf die Körner aufgebracht werden. Beispiele für erfindungsgemäß verwendbare Stoffe sind Polyethylen, Polypropylen, Polyoxymethylen, Polyamide, Acylnitril, Acrylnitril-Styrol-Butadien, Polystyrol, Polymethylmethacrylat, Polyethylmethacrylat und Polycarbonat.

Zusätzlich oder gänzlich ohne Wärmezufuhr können Lösemittel zur Beschichtung erfindungsgemäß beschichteter Körner mit einem bindefähigen Material verwendet werden. Über Lösemittel können auch andere Umhüllungen realisiert werden. Beispielsweise kann Wasserglas in Wasser gelöst werden und mit Sand vermischt werden. Im Anschluss wird das Material getrocknet und gebrochen. Durch Sieben werden übermäßig grobe Partikel entfernt. Da der Löseprozess reversibel ist, kann das so gewonnene Material im erfindungsgemäßen Prozess eingesetzt werden, indem es mit Wasser als Druckflüssigkeit bedruckt wird.

Die Umhüllung enthält Stoffe zum Start einer Polymerisation mit dem Binder. Auf die Weise kann der Abdampfprozess des Lösemittels im Partikelmaterial beschleunigt werden, da weniger Drucklösung durch Abdampfen aus dem Partikelmaterialkuchen entweichen muss. Damit können die Formteile schneller ihre Grünfestigkeit erreichen und somit früher aus dem Partikelmaterial entpackt werden.

Da sich die gedruckten Teile bei einem Lösemittelprozess nur wenig vom umgebenden losen Partikelmaterial unterscheiden, kann ein Färben der Formteile durch Einbringung eines Farbstoffes in das Druckmedium sinnvoll sein. Hierbei ist es möglich, eine Farbreaktion zu nutzen, die auf dem Zusammenbringen zweier Stoffe basiert. Beispielhaft kann Lackmus im Lösemittel genutzt werden. Das Grundmaterial wird vor der Beschichtung mit dem Binder mit dem Salz einer Säure vermischt. Damit ist nicht nur eine Färbung, sondern auch eine Kontrolle der Intensität der Lösereaktion möglich. Liegt die reaktive Substanz z.B. direkt am Korn des Basismaterials an und ist durch die Umhüllung geschützt, zeigt der Farbindikator an, dass die Hülle komplett gelöst wurde.

Der Prozess des Abdampfens des Lösungsmittels kann auch über Wärmezufuhr beschleunigt werden (Fig. 2). Dies kann über Konvektion oder Wärmestrahler erfolgen. Die Kombination aus einem Luftzug und Heizen ist besonders wirksam. Dabei ist zu beachten, dass bei zu schnellem Abtrocken die Lösung des Binders evtl. nur teilweise erfolgt ist. Durch Versuche und Variationen des Lösemittels können Optima bezüglich Festigkeitsentwicklung und Entpackzeit ermittelt werden.

Auf das beschichtete Korn wird im Druckprozess eine Druckflüssigkeit gegeben. In seiner Hauptfunktion löst die Druckflüssigkeit die Binderhülle. Beim Croning-Sand werden hierzu ca. 10 Gew.-% Druckflüssigkeit eingedruckt. Als Lösemittel eignet sich zum Beispiel Isopropanol. Nach dem Eindrucken beginnt das Lösemittel in die Binderhülle einzudringen (Fig. 4). Dabei steigt die Konzentration des Hüllenmaterials im Lösemittel. Dampft Lösemittel ab, konzentriert sich das Gemisch in der Kontaktstelle zwischen den Partikeln (Fig.5). Weiteres Verdampfen führt zu einer Verfestigung des Hüllenmaterials in der Kontaktstelle. Durch die vergleichsweise geringen Viskositäten ergibt sich im Gegensatz zu Schmelzprozessen ein günstiges Prozessfenster. Z.B. kann mit handelsüblichem Croning-Sand des Typs Hüttenes-Albertus RFS 5000 eine Auspack-Biegebruchfestigkeit von über 100 N/cm², vorzugsweise über 120 N/cm² erreicht werden. Das ist ausreichend, um selbst großformatige, filigrane Teile sicher und verzugsfrei zu entpacken.

Nach dem Auspacken - auch als Entpacken bezeichneten Verfahrensschritt, werden die Formteile dem Endverfestigungsschritt zugeführt. Anschließend werden die Formteile weiteren Folgeprozessen zugeführt. Dieser Verfahrensschritt der Erfindung wird als Wärmebehandlungsschritt ausgeführt. Als Beispiel können hier Teile aus Croning-Sand dienen. Nach dem Entpacken werden diese vorzugsweise wieder in ein weiteres Partikelmaterial eingebettet. Dieses weist jedoch keinerlei Binder-Umhüllung auf und ist vorzugsweise thermisch gut leitfähig. Im Anschluss werden die Teile in einem Ofen oberhalb der Schmelztemperatur des Binders wärmebehandelt. Das spezielle Phenolharz der Umhüllung in einer der bevorzugten Ausführungsformen wird dabei vernetzt und die Festigkeit steigt stark an. Allgemein sind für diesen Verfahrensschritt der Endverfestigung Schmelzklebstoffe bevorzugt. Als Basispolymere können vorzugsweise verwendet werden: PA (Polyamide), PE (Polyethylen), APAO (amorphe Polyalphaolefine), EVAC (Ethylenvinylacetat-Copolymere), TPE-E (Polyester-Elastomere), TPE-U (Polyurethan-Elastomere), TPE-A (Copolyamid-Elastomere) und Vinylpyrrolidon/Vinylacetat-Copolymere. Weitere übliche und dem Fachmann bekannte Zusatzstoffe wie Nukleierungsmittel können zugegeben werden.

Mit handelsüblichen Sanden werden mit dem erfindungsgemäßen Verfahren Formteile hergestellt, die Biegefestigkeiten von über 1000 N/cm² aufweisen.

### Beispiel 1

Es wird ein Croningsand der Type Huettenes-Albertus RFS 5000 in einem Schichtbauprozess verwendet. Dazu wird der Sand in einer Schicht von 0,2 mm auf eine Bauebene ausgebracht. Anschließend wird der Sand mittels eines Drop-On-Demand-Druckkopfes mit einer Lösung aus Isopropanol entsprechend der Querschnittsfläche des gewünschten Objektes so bedruckt, dass etwa 10 Gew.-% Flüssigkeit in die bedruckten Bereiche eingebracht werden. Anschließend wird die Bauebene relativ zum Schichtauftragsmechanismus um die Schichtstärke verschoben und der Vorgang bestehend aus Schichtauftrag und Bedrucken startet erneut. Dieser Zyklus wird solange wiederholt, bis das gewünschte Bauteil gedruckt ist. Der gesamte Vorgang läuft unter Normalbedingungen ab. Die Temperatur im Prozessraum sollte dabei zwischen 18°C und 28°C liegen, vorzugsweise zwischen 20°C und 24°C.

Anschließend muss etwa 24 Std. gewartet werden, bevor die letzten Schichten Sand eine ausreichende Festigkeit entwickelt haben. Dann kann das Bauteil entpackt, sprich vom umliegenden Sand und von sämtlichen Pulveranhaftungen befreit werden. Trocknet man mitgedruckte Prüfkörper im Umluftofen bei 40°C für 30 min, zeigen diese eine Biegebruchfestigkeit von 120 N/cm².

Die Teile werden dann für den anschließenden Wärmebehandlungsschritt vorbereitet. Dazu werden sie z.B. in unbeschichteten Sand, der sich in einem temperaturbeständigen Gefäß befindet eingebracht. Damit hierbei ein guter Kontakt zwischen Teil und stützendem Sand zustande kommt, wird das Gefäß während der Bestückung und Befüllung mit Sand mit Vibrationen beaufschlagt.

Während der Härtereaktion, d.h. dem Endverfestigungsschrittes, bei hohen Temperaturen kann auf diese Weise jegliche Deformation vermieden werden. Das Bauteil wird so für die Dauer von 10 Stunden bei 150 °C im Ofen erwärmt. Nach Entnahme aus dem Ofen muss wiederum ca. 30 min gewartet werden, bis das Bauteil soweit abgekühlt ist, dass es gehandhabt und aus dem Pulverbett entnommen werden kann. Die Anhaftungen nach diesem Prozessschritt können durch Sandstrahlen entfernt werden. Mitbehandelte Biegeprüfköper zeigen nach diesem Endverfestigungsschritt eine Biegebruchfestigkeit von 800 - 1000 N/cm².

### Beispiel 2

Analog zum ersten Beispiel wird ein Schichtbauprozess durchgeführt. In diesem Fall wird ein Croningsand der Type Huettenes-Albertus CLS-55 verwendet. Dazu wird der Sand wieder in einer Schicht von 0,2 mm auf eine Bauebene ausgebracht. Als Druckflüssigkeit wird eine 15%ige Lösung aus Corrodur von Huettenes-Albertus, 42,5% Ethanol und 42,5% Isopropanol verwendet.

Es werden etwa 10 Gew.-% Flüssigkeit auf den Sand gedruckt.

Die Biegebruchfestigkeit nach dem Auspacken des Formkörpers und Abschluss dieses ersten oder auch als Vorverfestigungsschritt bezeichneten Verfahrensschrittes liegt in diesem Fall bei 140 N/cm². Die End-Biegebruchfestigkeit nach dem zweiten oder auch als Endverfestigungsschrittes bezeichneten Verfahrensschrittes liegt wiederum bei 800 N/cm².

### Beispiel 3 (nicht erfindungsgemäss)

Der Prozess für dieses Herstellungsverfahren wird analog zu den vorherigen Beispielen durchgeführt. Mit unbehandeltem Sand als Basis werden hier Festigkeiten von 800 N/cm² erzielt. Als Binderflüssigkeit wird ein Gemisch aus 50% Corrodur und 50% Dioxolan verwendet. Es werden 10 Gew.-% eingedruckt. Der Prozess läuft bei Raumtemperatur ab. Das Bauteil muss nach dem Drucken nicht aus dem Partikelmaterial ausgepackt werden, da das nicht umhüllte Material durch die Wärmeenergie nicht gebunden werden kann. Es kann entweder die gesamte Box oder beispielsweise eine gedruckte Box in den Ofen zur Durchführung des Endverfestigungsschrittes gebracht werden. Ein Sandvolumen von 8x8x20cm, das einen Biegeprüfkörper enthält, wird 24 Std. im Ofen bei 150°C wärmebehandelt. Die Festigkeit nach Abschluss des Endvervestigungsschrittes beträgt ca. 800 N/cm². Eine Bestimmung des organischen Anteils über eine Glühverlustbestimmung zeigt 5 Gew-%. Der Werkstoff entspricht hier den Produkten RFS-5000 und CLS-55 von Hüttenes-Albertus. Nach dem Ofenprozess können die Teile über Sandstrahlen gereinigt werden.

## Patentansprüche

1. Verfahren zum Herstellen eines oder mehrerer Formkörper, wobei das Verfahren die Schritte umfasst:
a. schichtweisen Aufbau eines oder mehrerer Formkörper mittels wiederholtem Aufbringen von Partikelmaterial im 3D Druckverfahren, wobei das Partikelmaterial **gekennzeichnet ist durch** eine einphasige Beschichtung oder Umhüllung mit einem oder mehreren Materialien, wobei die Beschichtung oder die Umhüllung ein Binder ist,
b. einen Vorverfestigungsschritt zum Erzielen einer Vorverfestigung des Formkörpers, wobei der Vorverfestigungsschritt mittels Verwendung eines Lösemittels und einer Polymerisationsreaktion erfolgt durch selektives Aufdrucken eines Lösungsmittels auf das Binder-umhüllte Partikelmaterial,
c. einen Entpackschritt, wobei das nicht verfestigte Partikelmaterial von dem vorverfestigten Formkörper getrennt wird,
d. einen Endverfestigungsschritt, bei dem der Formkörper seine Endfestigkeit erhält, durch Einwirkung von Wärmeenergie, wobei der Binder polymerisierbare Monomere enthält und wobei die Beschichtung oder Umhüllung Stoffe zum Start einer Polymerisation mit dem Binder enthält.

2. Verfahren nach Anspruch 1,
wobei der Formkörper einem oder mehreren weiteren Bearbeitungsschritten unterzogen wird,
vorzugsweise wobei der Formkörper im Vorverfestigungsschritt soweit verfestigt wird, dass ein Entpacken aus dem nicht verfestigten Partikelmaterial möglich ist und der Formkörper dabei seine im 3D Druckverfahren definierte Form im wesentlichen beibehält,
vorzugsweise wobei das Entpacken manuell oder maschinell oder Robotor gestützt erfolgt,
vorzugsweise wobei der vorverfestigte Formkörper (Grünkörper) nach dem Vorverfestigungsschritt eine Biegefestigkeit, aufweist von mehr als 120 N/cm², vorzugsweise von mehr als 200 N/cm², besonders bevorzugt von 120 bis 400 N/cm²,
vorzugsweise wobei der Formkörper nach dem Endverfestigungsschritt eine Biegefestigkeit, aufweist von mehr als 250 N/cm², vorzugsweise von 250 bis 750 N/cm², vorzugsweise von mehr als 750 N/cm², besonders bevorzugt von mehr als 1000 N/cm², noch mehr bevorzugt von mehr als 1200 N/cm²,
vorzugsweise wobei der Vorverfestigungsschritt ohne Einbringen zusätzlicher Wärmeenergie erfolgt,
vorzugsweise wobei der Körper durch inertes Material gestützt wärmebehandelt wird.

3. Verfahren nach Anspruch 1, wobei die Temperatur im Endverfestigungsschritt bei 110 °C - 130 °C, vorzugsweise bei 130 °C - 150 °C, besonders bevorzugt bei 150 °C - 200 °C erfolgt,
vorzugsweise wobei die Temperatur am Bauteil im Zeitbereich von 2-24 Std., besonders bevorzugt von 2-5 Std. gehalten wird,
vorzugsweise wobei als Partikelmaterial natürlicher Quarzsand, Kerphalite, Cerasbeads, Zirkonsand, Chromitsand, Olivinsand, Schamotte, Korund oder Glaskugeln verwendet werden.

4. Verfahren nach einem der vorhergehenden Ansprüche, wobei die Umhüllung oder Beschichtung thermoplastische Polymere; lösliche Polymere, Wachse, Kunst-und Naturharze, Zuckern, Salze, anorganische Netzwerkbildner oder Wassergläser umfasst.

5. Verfahren nach einem der vorhergehenden Ansprüche, wobei das Lösungsmittel besteht aus Wasser, Kohlenwasserstoffen, Alkoholen, Estern, Ethern, Ketonen, Aldehyden, Acetaten, Succinaten, Monomeren, Formaldehyd, Phenol und Gemische davon oder diese umfasst.

6. Verfahren nach einem der vorhergehenden Ansprüche, wobei das in der Umhüllung oder Beschichtung enthaltene Material zu der Endfestigkeit oder zu der Vorfestigkeit im Vorverfestigungsschritt und zu der Endfestigkeit im Endverfestigungsschritt beiträgt.

7. Verfahren nach einem der vorhergehenden Ansprüche, wobei in der Umhüllung oder Beschichtung zwei unterschiedliche Materialien enthalten sind, wobei das eine Material im wesentlichen für den Vorverfestigungsschritt bestimmt ist und das andere Material im wesentlichen für den Endverfestigungsschritt bestimmt ist,
vorzugsweise wobei die Beschichtung oder Umhüllung ein Farbindikator enthält, der durch den Binder aktiviert wird,
vorzugsweise wobei der eine oder die mehreren weiteren Bearbeitungsschritte ausgewählt sind aus der Gruppe bestehend aus Polieren oder Färben.

## Claims

1. A method of producing one or more moulded bodies, the method comprising the steps of:
a. layer-wise construction of one or more moulded bodies by means of repeated application of particulate material in a 3D printing process, the particulate material being **characterized by** a single-phase coating or covering with one or more materials, the coating or covering being a binder,
b. a pre-solidification step for achieving pre-solidification of the moulded body, wherein the pre-solidification step is performed by using a solvent and a polymerization reaction by selectively printing a solvent on the binder-covered particulate material,
c. an unpacking step in which the non-solidified particulate material is separated from the pre-solidified moulded body,
d. a final solidification step, in which the moulded body obtains its final strength, by the action of thermal energy, wherein the binder contains polymerizable monomers and wherein the coating or coveringcontains substances for starting a polymerization with the binder.

2. The method according to claim 1,
wherein the moulded body is subjected to one or more further processing steps,
preferably wherein the moulded body is solidified in the pre-solidification step to such an extent that unpacking from the non-solidified particulate material is possible and the moulded body substantially retains its shape defined in the 3D printing process,
preferably wherein the unpacking is done manually or by machine or aided by a robot,
preferably wherein the pre-solidified moulded body (green body) after the pre-solidification step has a bending strength of more than 120 N/cm², preferably more than 200 N/cm², particularly preferably 120 to 400 N/cm²,
preferably wherein the pre-solidified moulded body after the final solidification step has a bending strength of more than 250 N/cm², preferably from 250 to 750 N/cm², preferably more than 750 N/cm², particularly preferably more than 1,000 N/cm², still more preferably more than 1200 N/cm²,
preferably whereby the pre-solidification step is effected without the introduction of additional thermal energy,
preferably wherein the body is heat treated with the aid of inert material.

3. The method according to claim 1, wherein the temperature in the final solidification step is 110°C-130°C, preferably 130°C-150°C, particularly preferably 150°C-200°C,
preferably wherein the temperature on the component is maintained over a time ranging from 2-24 hours, particularly preferably 2-5 hours,
preferably wherein natural quartz sand, kerphalite, ceramic beads, zircon sand, chromite sand, olivine sand, fireclay, corundum or glass beads are used as the particulate material.

4. The method according to any one of the preceding claims, wherein the covering or coating comprises thermoplastic polymers, soluble polymers, waxes, synthetic and natural resins, sugars, salts, inorganic network formers or water glasses.

5. The method according to any one of the preceding claims, wherein the solvent consists of or comprises water, hydrocarbons, alcohols, esters, ethers, ketones, aldehydes, acetates, succinates, monomers, formaldehyde, phenol and mixtures thereof.

6. The method according to any one of the preceding claims, wherein the material contained in the covering or coating contributes to the final strength or to the initial strength in the pre-solidification step and to the final strength in the final solidification step.

7. The method according to any one of the preceding claims, wherein two different materials are contained in the covering or coating, one material being substantially intended for the pre-solidification step and the other material being substantially intended for the final solidification step,
preferably wherein the coating or covering contains a colour indicator which is activated by the binder,
preferably wherein the one or more further processing steps are selected from the group consisting of polishing or colouring.

## Revendications

1. Procédé de production d'un ou plusieurs corps façonnés, le procédé comprenant les étapes suivantes:
a. construction par couches d'un ou plusieurs corps façonnés au moyen de l'application répétée d'un matériau particulaire dans un procédé d'impression 3D, le matériau particulaire étant **caractérisé par** un revêtement monophasé ou une enveloppe monophasée comprenant un ou plusieurs matériaux, ledit revêtement ou ladite enveloppe étant un liant,
b. une étape de pré-solidification pour obtenir une pré-solidification du corps façonné, ladite étape de pré-solidification étant réalisée en utilisant un solvant et une réaction de polymérisation par impression sélective d'un solvant sur le matériau particulaire enveloppé de liant,
c. une étape de déballage, dans laquelle le matériau particulaire non solidifié est séparé du corps façonné pré-solidifié,
d. une étape de solidification finale dans laquelle le corps façonné obtient sa solidité finale par l'action d'énergie thermique, le liant contenant des monomères polymérisables et le revêtement ou l'enveloppe contenant des substances permettant d'initier une polymérisation avec le liant.

2. Procédé selon la revendication 1,
dans lequel le corps façonné est soumis à une ou plusieurs étapes de traitement ultérieures,
de préférence dans lequel le corps façonné est solidifié dans l'étape de pré-solidification à un point tel qu'un enlèvement du matériau particulaire non solidifié est possible et le corps façonné conserve sensiblement sa forme définie dans le procédé d'impression 3D,
de préférence dans lequel l'enlèvement est effectué manuellement ou mécaniquement ou avec un support robotisé,
de préférence dans lequel le corps façonné pré-solidifié (corps vert) a une résistance à la flexion, après l'étape de pré-solidification, supérieure à 120 N/cm², de préférence supérieure à 200 N/cm², particulièrement préférablement de 120 à 400 N/cm²,
de préférence dans lequel le corps façonné a une résistance à la flexion, après l'étape de solidification finale, supérieure à 250 N/cm², de préférence de 250 à 750 N/cm², de préférence supérieure à 750 N/cm², particulièrement préférablement supérieure à 1000 N/cm², encore plus de préférence supérieure à 1200 N/cm²,
de préférence dans lequel l'étape de pré-solidification a lieu sans l'introduction d'énergie thermique supplémentaire,
de préférence dans lequel le corps est traité thermiquement, supporté par un matériau inerte.

3. Procédé selon la revendication 1, dans lequel la température dans l'étape de solidification finale est de 110 °C - 130 °C, de préférence de 130 °C - 150 °C, particulièrement préférablement de 150 °C - 200 °C,
de préférence dans lequel la température sur le composant est maintenue dans une plage de temps de 2 à 24 heures, et plus particulièrement de 2 à 5 heures,
de préférence dans lequel on utilise, comme matériau particulaire, du sable de quartz naturel, de la kerphalite, des billes de céramique, du sable de zircon, du sable de chromite, du sable d'olivine, de la chamotte, du corindon ou des billes de verre.

4. Procédé selon l'une quelconque des revendications précédentes, dans lequel l'enveloppe ou le revêtement comprend des polymères thermoplastiques, des polymères solubles, des cires, des résines synthétiques et naturelles, des sucres, des sels, des formateurs de réseaux inorganiques ou des verres solubles.

5. Procédé selon l'une quelconque des revendications précédentes, dans lequel le solvant consiste en ou comprend de l'eau, des hydrocarbures, des alcools, des esters, des éthers, des cétones, des aldéhydes, des acétates, des succinates, des monomères, du formaldéhyde, du phénol et des mélanges de ceux-ci.

6. Procédé selon l'une quelconque des revendications précédentes, dans lequel le matériau contenu dans l'enveloppe ou le revêtement contribue à la solidité finale ou à la solidité initiale dans l'étape de pré-solidification et à la solidité finale dans l'étape de solidification finale.

7. Procédé selon l'une quelconque des revendications précédentes, dans lequel deux matériaux différents sont contenus dans l'enveloppe ou le revêtement, un matériau étant destiné essentiellement à l'étape de pré-solidification et l'autre matériau étant destiné essentiellement à l'étape de solidification finale,
de préférence dans lequel le revêtement ou l'enveloppe contient un indicateur de couleur qui est activé par le liant,
de préférence dans lequel l'une ou les plusieures étapes de traitement ultérieur(es) sont choisies dans le groupe constitué par le polissage ou la coloration.
